# FASCICULE DE BREVET EUROPEEN

(11) **EP 3 671 165 B1**
(45) Date de publication et mention de la délivrance du brevet: **22.03.2023**
(21) Numéro de dépôt: 19215648.7
(22) Date de dépôt: 12.12.2019
(51) Int. Cl.: G01L 19/14

(54) **CAPTEUR DE PRESSION À LA PRESSION ATMOSPHÉRIQUE**
DRUCKSENSOR FÜR LUFTDRUCK
PRESSURE SENSOR AT ATMOSPHERIC PRESSURE

(30) Priorité: 20.12.2018 FR 1873549
(43) Date de publication de la demande: 24.06.2020
(73) Titulaire: SC2N, 94046 Creteil Cedex (FR)
(72) Inventeur: GUEGUEN, Olivier, 95892 CERGY PONTOISE (FR); BOUTEVEILLES, Arnaud, 95892 CERGY PONTOISE (FR); TARDIEU, Olivier, 95892 CERGY PONTOISE (FR)
(74) Mandataire: Valeo Powertrain Systems

(56) Documents cités:
- EP-A1- 2 568 270
- US-B2- 7 159 464

## Description

La présente invention concerne un capteur de pression pour mesurer la pression dans un organe d'un moteur thermique de véhicule et un organe de moteur comprenant un tel capteur.

Un tel capteur de pression est utilisé dans les systèmes de gaz d'échappement de véhicules thermiques. Il peut par exemple être utilisé pour mesurer une différence de pression ou deux pressions absolues à deux endroits différents d'une ligne d'échappement, comme par exemple avant et après un filtre à particules.

Par exemple, ce capteur de pression peut être utilisé dans un système de recirculation des gaz d'échappement EGR (Exhaust Gas Recirculation). Il peut également être utilisé dans un système DPF (Diesel Particulate Filter) ou GPF (Gasoline Particulate Filter) pour vérifier si les durites sont propres et s'assurer qu'il n'y a pas de fuites dans ces dernières, c'est-à-dire si elles ne sont pas abîmées.

On connaît de l'art antérieur des capteurs de pression différentielle comprenant un boîtier de protection comportant un circuit imprimé comprenant deux éléments sensibles à la pression.

Le circuit imprimé peut être en céramique ou polymère et comprendre une ouverture fermée par chaque élément sensible à la pression et des composants électroniques connectés électriquement à l'élément sensible à la pression.

Le boîtier de protection comprend une première entrée de pression P1 communicant avec un premier élément sensible à la pression pour mesurer une première pression dans l'organe du moteur et une deuxième entrée de pression P2 communicant avec un deuxième élément sensible à la pression pour mesurer une deuxième pression dans l'organe du moteur.

Chaque élément sensible à la pression comprend une première face en communication avec une des entrées de pression et une deuxième face en communication avec une troisième entrée de pression reliée à la pression atmosphérique. Ces deux faces de l'élément sensible à la pression sont isolées hermétiquement.

Une chambre de mise à la pression atmosphérique est prévue entre la troisième entrée de pression et les deuxièmes faces des éléments sensibles à la pression.

La chambre de mise à la pression atmosphérique et la troisième entrée de pression sont séparées par une membrane respirante permettant à l'air de passer tout en empêchant la pénétration d'eau, de condensats et de particules venant de l'extérieure dans la chambre de mise à la pression atmosphérique. Cependant, la fabrication du capteur de pression nécessite d'utiliser une membrane respirante qui est un composant supplémentaire.

La fabrication de ce capteur de pression nécessite également une étape supplémentaire de positionnement de la membrane respirante entre la chambre de mise à la pression atmosphérique et la troisième entrée de pression. Les documents US 7159464 et EP 2568270 divulguent des capteurs de pression avec de boîtiers de protection comprenant une enveloppe externe.

L'invention a donc pour objectif de pallier à ces inconvénients de l'art antérieur en proposant un capteur de pression plus simple et de conception simplifiée par rapport aux capteurs de l'art antérieur tout en garantissant une protection contre la pénétration d'eau et des poussières au moins équivalente à celle de l'art antérieur.

L'invention concerne un capteur de pression destiné à être monté sur un organe d'un moteur de véhicule, le capteur comprenant: un circuit imprimé comportant au moins un élément sensible à la pression connecté électriquement au circuit imprimé, et un boîtier de protection dans lequel est logé le circuit imprimé et l'élément sensible à la pression, le boîtier de protection comprenant une chambre à la pression atmosphérique. L'élément sensible à la pression comprend une première face en communication fluidique avec une cavité reliée à une entrée de pression pour mesurer une pression dans l'organe du moteur et une deuxième face, opposée à la première face, en communication fluidique avec la chambre. La chambre et la cavité sont séparées hermétiquement l'une de l'autre par l'élément sensible à la pression.

Selon l'invention, la chambre est délimitée en partie par une enveloppe externe comprenant deux chemins de circulation d'air distincts reliés à l'atmosphère dont un premier chemin de circulation d'air et un deuxième chemin de circulation d'air. L'enveloppe externe est positionnée à une partie inférieure du boîtier de protection qui est destinée à être orientée vers une partie basse du véhicule lorsque le capteur de pression est monté sur l'organe du moteur de véhicule.

Selon l'invention, l'enveloppe externe comprend une paroi périphérique formée sur un corps du boîtier de protection et qui entoure la chambre, et un couvercle amovible comprenant une face principale s'emboitant dans la paroi périphérique du corps pour refermer la chambre. Les deux chemins de circulation d'air sont formés entre la paroi périphérique du corps et le couvercle.

La paroi périphérique peut comprendre deux parois longitudinales de grande dimension, opposées l'une à l'autre, et deux parois latérales de plus petite dimension, opposées l'une à l'autre. Le premier chemin de circulation d'air est formé dans l'une des parois longitudinales et le deuxième chemin de circulation d'air est formé dans l'une des parois latérales. Les parois longitudinales sont perpendiculaires aux parois latérales.

La paroi périphérique du corps du boîtier de protection peut comprendre deux ouvertures chacune délimitée par un rebord d'ouverture. Le couvercle comprend deux languettes s'étendant perpendiculairement à la face principale du couvercle depuis un bord périphérique du couvercle. Chaque languette est destinée à obturer partiellement l'une des ouvertures pour former un des chemins de circulation d'air, lorsque le couvercle est emboité sur le corps.

Les première et deuxième faces de l'élément sensible à la pression sont perpendiculaires aux deux ouvertures.

Chaque chemin de circulation d'air peut comprendre un premier espace, un deuxième espace et un troisième espace de façon à former un chemin de circulation d'air non linéaire.

Les ouvertures peuvent être entourées par un évidemment creusé dans la paroi périphérique du corps. L'évidemment est délimité par une partie de paroi d'épaisseur plus faible que le reste de la paroi périphérique. Les languettes présentent une largeur et une longueur supérieures à celles des chemins de circulation d'air de façon à s'insérer dans l'évidemment. Chaque languette présente une zone périphérique en regard et distante de la partie de paroi de façon à former le premier espace entre la zone périphérique de la languette et la partie de paroi.

L'évidemment peut être entouré par une bordure perpendiculaire à la partie de paroi. Chaque languette présente une bordure avant en regard et distante de la bordure entourant l'évidemment de façon à former le deuxième espace entre cette bordure et la bordure avant de la languette lorsque le couvercle est emboité dans le corps.

Lorsque le couvercle est emboité dans la paroi périphérique du corps, le troisième espace est formé entre le rebord d'ouverture de la paroi périphérique du corps du boîtier de protection et la face principale du couvercle.

Le capteur de pression comprend deux éléments sensibles à la pression connectés électriquement au circuit imprimé. Les deux éléments sensibles à la pression ont chacune une première face en communication fluidique avec une cavité reliée à une entrée de pression pour mesurer deux pressions distinctes dans l'organe du moteur.

L'invention concerne également un organe de moteur de véhicule monté sur un châssis comprenant un capteur de pression tel que défini précédemment. La partie inférieure du boîtier de protection du capteur de pression est orientée vers le châssis du véhicule. La face principale du couvercle et les faces de l'élément sensible à la pression sont sensiblement parallèles au châssis et orientées vers ce dernier. Les ouvertures du boîtier de protection s'étendent selon un plan perpendiculaire au châssis.

L'invention fournit ainsi un capteur de pression plus simple que ceux de l'art antérieur tout en garantissant une protection contre la pénétration d'eau et des poussières au moins équivalente à celle de l'art antérieur.

Afin de limiter l'écart de sensibilité et d'homogénéiser la mesure du capteur de pression, les deux éléments sensibles à la pression sont soumis à la pression atmosphérique sur leur deuxième face qui est en regard de la chambre à pression atmosphérique.

Le risque de pénétration d'eau et de condensats dans la chambre à la pression atmosphérique du capteur de pression est réduit, évitant d'endommager l'élément sensible. De plus, la position des chemins de circulation d'air et l'orientation du capteur de pression permet de chasser facilement l'eau de la chambre.

Le premier chemin de circulation d'air se trouve dans la partie inférieure du capteur de pression, lorsque celui-ci est fixé sur l'organe du moteur, afin de minimiser l'entrée d'eau ou de condensats venant naturellement du haut, et de les chasser facilement.

Le deuxième chemin de circulation d'air est situé, dans un plan horizontal, à 90° par rapport au premier chemin de circulation d'air, permettant de créer un appel d'air nécessaire à l'évacuation des condensats.

L'orientation des faces principales des éléments sensibles à la pression doit être perpendiculaire à l'axe d'évacuation des liquides et condensats via les chemins de circulation d'air.

Autrement dit, les ouvertures formées sur le corps du boitier de protection sont partiellement recouvertes par les languettes situées sur le couvercle, empêchant la poussière et les particules de pénétrer dans la chambre à pression atmosphérique.

La fabrication de ce capteur de pression est également simplifiée étant donné que l'étape de positionnement de la membrane est supprimée.

Il est possible de réaliser les ouvertures et le boitier de protection lors d'une même étape de moulage.

De même, il est possible de réaliser le couvercle et les languettes lors d'une même étape de moulage.

Le nombre de pièces à référencer diminue.

Les caractéristiques de l'invention seront décrites plus en détail en se référant aux dessins annexés dans lesquels :
- La [Fig. 1] est une représentation schématique en coupe d'un capteur de pression différentiel selon l'invention ;
- La [Fig. 2] est une représentation schématique en vue éclatée de ce capteur de pression;
- La [Fig. 3] est une autre représentation schématique en coupe de ce capteur montrant deux éléments sensibles à la pression.

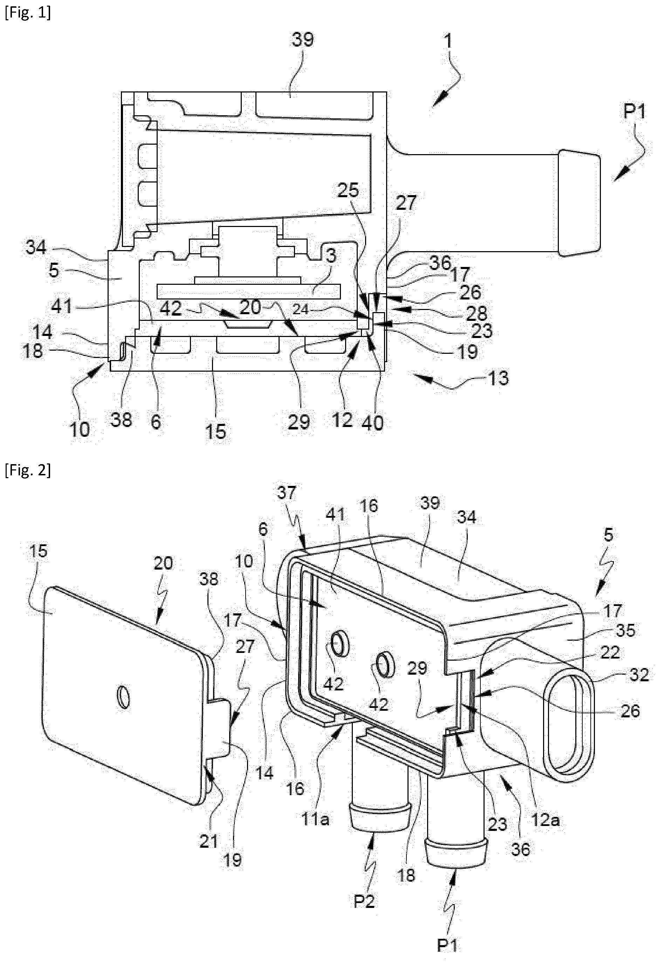

La figure 1 représente schématiquement un capteur de pression 1 pour mesurer une différence de pression dans un organe d'un moteur de véhicule tel un système de gaz d'échappement, par exemple.

Ce capteur de pression 1 comprend un circuit imprimé 3 comportant au moins un élément sensible à la pression 2a, 2b connecté électriquement au circuit imprimé 3.

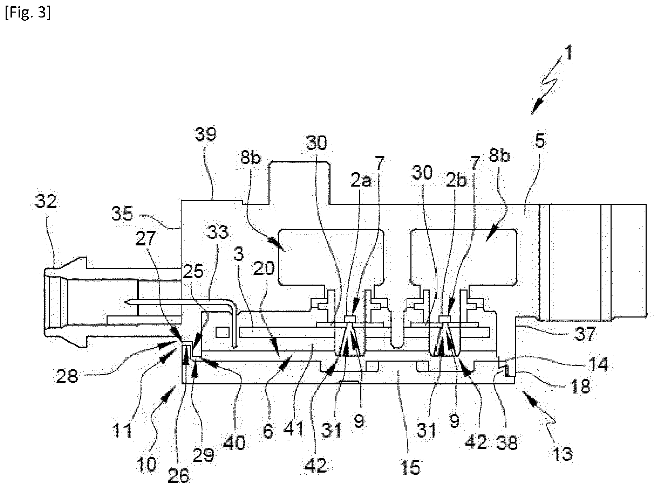

Dans l'exemple des figures 1 à 3, le capteur de pression 1 est un capteur de pression différentiel ayant un circuit imprimé 3 comprenant un premier élément sensible à la pression 2a et un deuxième élément sensible à la pression 2b connectés électriquement au circuit imprimé 3.

Le capteur de pression 1 comprend également un boîtier de protection 5 dans lequel est logé le circuit imprimé 3 et les éléments sensibles à la pression 2a, 2b. Le boîtier de protection 5 comprend une chambre 6 reliée à la pression atmosphérique.

Le premier élément sensible à la pression 2a comprend une première face 7 en communication fluidique avec une première cavité 8a reliée à une première entrée de pression P1 pour mesurer une première pression dans l'organe du moteur et une deuxième face 9, opposée à la première face 7, en communication fluidique avec la chambre 6.

De même, le deuxième élément sensible à la pression 2b comprend une première face 7 en communication fluidique avec une deuxième cavité 8b reliée à une deuxième entrée de pression P2 pour mesurer une deuxième pression dans l'organe du moteur et une deuxième face 9, opposée à la première face 7, en communication fluidique avec la chambre 6.

La chambre 6 et la première cavité 8a sont séparées hermétiquement l'une de l'autre par le premier élément sensible à la pression 2a. De même, la chambre 6 et la deuxième cavité 8b sont séparées hermétiquement l'une de l'autre par le deuxième élément sensible à la pression 2b.

Les deux éléments sensibles à la pression 2a, 2b sont des éléments sensibles à la pression mesurant une pression différentielle. A titre d'exemple, la première face 7 du premier élément sensible à la pression 2a est en contact avec un milieu ayant une pression P₁. La première face 7 du deuxième élément sensible à la pression 2b est en contact avec un milieu ayant une pression P₂.

Les deuxièmes faces 9 du premier 2a et du deuxième élément sensible à la pression 2b sont en communication fluidique avec la chambre 6 qui est à la pression atmosphérique Pₐₜₘ.

Le circuit imprimé 3 peut être un circuit imprimé appelé FR4 PCB (« Flamme Résistant 4 Printed Circuit Board ») qui est un composite de résine époxy renforcé de fibre de verre ou un circuit céramique.

Le circuit imprimé 3 comprend des composants électroniques connectés électriquement aux éléments sensibles à la pression 2a, 2b au moyen de connections électriques (non représentés).

Le capteur de pression 1 comprend deux supports d'élément sensible 30 supportant chacun un des éléments sensibles à la pression 2a, 2b.

Un orifice 31 est prévu dans chaque support d'élément sensible 30. Chaque orifice 31 est fermé par un des éléments sensibles à la pression 2a, 2b.

Le capteur de pression 1 comprend un connecteur 32 pour le relier à un dispositif électronique de contrôle externe (non représentés).

Le circuit imprimé 3 est relié à des contacts électriques de ce connecteur 32 au moyen de liaisons électriques 33.

Selon l'invention, la chambre 6 est délimitée en partie par une enveloppe externe 10 comprenant deux chemins de circulation d'air 11, 12 distincts reliés à l'atmosphère dont un premier chemin de circulation d'air 11 et un deuxième chemin de circulation d'air 12.

L'enveloppe externe 10 est positionnée à une partie inférieure 13 du boîtier de protection 5 qui est destinée à être orientée vers une partie basse ou inférieure du véhicule lorsque le capteur de pression 1 est monté sur l'organe du moteur de véhicule (non représenté).

Autrement dit, la partie inférieure 13 est la partie du capteur de pression 1 qui est la plus proche du sol ou bien celle qui est orientée vers le sol, en condition normale de fonctionnement du véhicule.

La deuxième face 9 de l'élément sensible à la pression 2a, 2b est orientée vers la chambre 6, l'enveloppe externe 10 et vers le sol, en condition normale de fonctionnement du véhicule.

Ceci permet de minimiser l'entrée d'eau ou de condensats venant naturellement du haut dans la chambre 6 à la pression atmosphérique du capteur de pression 1, et de les chasser facilement de la chambre 6.

L'enveloppe externe 10 comprend une paroi périphérique 14 formée sur un corps 39 du boîtier de protection 5 et un couvercle 15 amovible comprenant une face principale 20. La face principale 20 est de préférence plane.

Le corps 39 comprend une paroi de séparation 41 séparant la chambre 6 des éléments sensibles à la pression 2a, 2b.

La paroi de séparation 41 comprend deux ouvertures 42 positionnés chacun en regard d'un des éléments sensibles à la pression 2a, 2b et permettant une communication entre la chambre 6 et la deuxième face 9 des éléments sensibles à la pression 2a, 2b.

La chambre 6 est délimitée par la paroi de séparation 41 et l'enveloppe externe 10 comprenant la paroi périphérique 14 et la face principale 20 du couvercle 15.

Le couvercle 15 s'emboite ou se clipse dans la paroi périphérique 14 du corps 39 pour refermer la chambre 6.

Les deux chemins de circulation d'air 11, 12 sont formés entre la paroi périphérique 14 du corps 39 et le couvercle 15.

La paroi périphérique 14 s'étend depuis le boîtier de protection 5 vers l'extérieur, par rapport à des faces latérales 34, 35, 36, 37 du boîtier de protection 5 et parallèlement à ces faces latérales 34, 35, 36, 37.

La paroi périphérique 14 comprend deux parois longitudinales 16 de grande dimension, opposées l'une à l'autre, et deux parois latérales 17 de plus petite dimension, opposées l'une à l'autre.

Le premier chemin de circulation d'air 11 est formé dans l'une des parois longitudinales 16.

Le deuxième chemin de circulation d'air 12 est formé dans l'une des parois latérales 17.

Les parois longitudinales 16 sont sécantes et de préférence perpendiculaires aux parois latérales 17.

Le couvercle 15 comprend un rebord 38 à sa périphérie s'étendant perpendiculairement à la face principale 20 du couvercle 15.

La paroi périphérique 14 du corps 39 du boîtier de protection 5 comprend un rebord externe 18.

Le rebord 38 du couvercle 15 s'emboite dans le rebord externe 18 de la paroi périphérique 14 du corps 39.

La paroi périphérique 14 du corps 39 du boîtier de protection 5 comprend deux ouvertures 11a, 12a chacune délimitée par un rebord d'ouverture 29, comme illustrées sur la figure 2.

Les première et deuxième faces 7, 9 de l'élément sensible à la pression 2a, 2b sont perpendiculaires aux deux ouvertures 11a, 12a.

Le couvercle 15 comprend deux languettes 19 s'étendant perpendiculairement à la face principale 20 du couvercle 15 depuis un bord périphérique 21 du couvercle 15.

Chaque languette 19 est destinée à obturer partiellement l'une des ouvertures 11a, 12a pour former une partie d'un des chemins de circulation d'air 11, 12.

Les deux ouvertures 11a, 12a et les languettes 19 présentent une forme parallélépipédique, rectangulaire par exemple.

Les ouvertures 11a, 12a sont entourées par un évidemment 22 creusé dans la paroi périphérique 14 du corps 39.

L'évidemment 22 est délimité par une partie de paroi 23 d'épaisseur plus faible que le reste de la paroi périphérique 14.

Les languettes 19 présentent une largeur et une longueur supérieures à celles des chemins de circulation d'air 11, 12 de façon à s'insérer dans l'évidemment 22.

Chaque languette 19 présente une zone périphérique 24 en regard et distante de la partie de paroi 23 de façon à former un premier espace 25 entre la zone périphérique 24 de la languette 19 et la partie de paroi 23.

Le premier espace 25 forme une partie d'un des chemins de circulation d'air 11, 12.

L'évidemment 22 est entouré par une bordure 26 perpendiculaire à la partie de paroi 23.

Chaque languette 19 présente une bordure avant 27 en regard et distante de la bordure 26 entourant l'évidemment 22 de façon à former un deuxième espace 28 entre cette bordure 26 et la bordure avant 27 de la languette 19 lorsque le couvercle 15 est emboité dans le corps 39.

Le deuxième espace 25 forme une partie d'un des chemins de circulation d'air 11, 12.

Lorsque le couvercle 15 est emboité dans la paroi périphérique 14 du corps 39, un troisième espace 40 est formé entre le rebord d'ouverture 29 de la paroi périphérique 14 du corps 39 du boîtier de protection 5 et la face principale 20 du couvercle 15.

Le troisième espace 40 forme une partie d'un des chemins de circulation d'air 11, 12.

Ainsi, chaque chemin de circulation d'air 11, 12 comprend le premier espace 25, le deuxième espace 28 et le troisième espace 40 de façon à former un chemin de circulation d'air 11, 12 non linéaire.

Dans les exemples des figures 1 à 3, chaque chemin de circulation d'air 11, 12 comprend deux courbures à 90°.

Ces espaces 25, 28, 40 forment des chicanes permettant de laisser passer l'air mais de retenir l'eau et les poussières.

L'invention concerne également un organe de moteur de véhicule comprenant un capteur de pression 1 tel que défini précédemment.

La partie inférieure 13 du boîtier de protection 5 du capteur de pression 1 est orientée vers le sol en condition normale de fonctionnement du véhicule ou vers le châssis du véhicule.

La face principale 20 du couvercle 15 et les faces 7, 9 de l'élément sensible à la pression 2a, 2b sont sensiblement parallèles au châssis du véhicule et orientées vers ce dernier ou le sol.

Les ouvertures 11a, 12a s'étendent selon un plan perpendiculaire au châssis.

## Revendications

1. Capteur de pression (1) destiné à être monté sur un organe d'un moteur de véhicule comprenant:
- un circuit imprimé (3) comportant au moins un élément sensible à la pression (2a, 2b) connecté électriquement au circuit imprimé (3), et
- un boîtier de protection (5) dans lequel est logé le circuit imprimé (3) et l'élément sensible à la pression (2a, 2b), le boîtier de protection (5) comprenant une chambre (6) à la pression atmosphérique, l'élément sensible à la pression (2a, 2b) comprenant une première face (7) en communication fluidique avec une cavité (8a, 8b) reliée à une entrée de pression (P1, P2) pour mesurer une pression dans l'organe du moteur et une deuxième face (9), opposée à la première face (7), en communication fluidique avec la chambre (6), la chambre (6) et la cavité (8a, 8b) étant séparées hermétiquement l'une de l'autre par l'élément sensible à la pression (2a, 2b),
la chambre (6) étant délimitée en partie par une enveloppe externe (10) comprenant deux chemins de circulation d'air (11, 12) distincts reliés à l'atmosphère dont un premier chemin de circulation d'air (11) et un deuxième chemin de circulation d'air (12), l'enveloppe externe (10) étant positionnée à une partie inférieure (13) du boîtier de protection (5) destinée à être orientée vers une partie basse du véhicule lorsque le capteur de pression (1) est monté sur l'organe du moteur de véhicule,
**caractérisé en ce que** l'enveloppe externe (10) comprend une paroi périphérique (14) formée sur un corps (39) du boîtier de protection (5), entourant la chambre (6), et un couvercle (15) amovible comprenant une face principale (20) s'emboîtant dans la paroi périphérique (14) du corps (39) pour refermer la chambre (6), les deux chemins de circulation d'air (11, 12) étant formés entre la paroi périphérique (14) du corps (39) et le couvercle (15).

2. Capteur de pression (1) selon la revendication 1, **caractérisé en ce que** la paroi périphérique (14) comprend deux parois longitudinales (16) de grande dimension, opposées l'une à l'autre, et deux parois latérales (17) de plus petite dimension, opposées l'une à l'autre, le premier chemin de circulation d'air (11) étant formé dans l'une des parois longitudinales (16) et le deuxième chemin de circulation d'air (12) étant formé dans l'une des parois latérales (17), les parois longitudinales (16) étant perpendiculaires aux parois latérales (17).

3. Capteur de pression (1) selon l'une quelconque des revendications 1 ou 2, **caractérisé en ce que** la paroi périphérique (14) du corps (39) du boîtier de protection (5) comprend deux ouvertures (11a, 12a) chacune délimitée par un rebord d'ouverture (29), le couvercle (15) comprenant deux languettes (19) s'étendant perpendiculairement à la face principale (20) du couvercle (15) depuis un bord périphérique (21) du couvercle (15), chaque languette (19) étant destinée à obturer partiellement l'une des ouvertures (11a, 12a) pour former un des chemins de circulation d'air (11, 12) lorsque le couvercle (15) est emboité sur le corps (39).

4. Capteur de pression (1) selon la revendication 3, **caractérisé en ce que** le plan comprenant les première et deuxième faces (7, 9) de l'élément sensible à la pression (2a, 2b) sont perpendiculaires aux plans passant par les deux ouvertures (11a, 12a).

5. Capteur de pression (1) selon l'une quelconque des revendications 1 à 4, **caractérisé en ce que** chaque chemin de circulation d'air (11, 12) comprend un premier espace (25), un deuxième espace (28) et un troisième espace (40) de façon à former un chemin de circulation d'air (11, 12) non linéaire.

6. Capteur de pression (1) selon la revendication 5 lorsqu'elle dépend d'une des revendications 4 ou 5, **caractérisé en ce que** les ouvertures (11a, 12a) sont entourées par un évidemment (22) creusé dans la paroi périphérique (14) du corps (39), l'évidemment (22) étant délimité par une partie de paroi (23) d'épaisseur plus faible que le reste de la paroi périphérique (14), les languettes (19) présentant une largeur et une longueur supérieures à celles des chemins de circulation d'air (11, 12) de façon à s'insérer dans l'évidemment (22), chaque languette (19) présentant une zone périphérique (24) en regard et distante de la partie de paroi (23) de façon à former le premier espace (25) entre la zone périphérique (24) de la languette (19) et la partie de paroi (23).

7. Capteur de pression (1) selon la revendication 6, **caractérisé en ce que** l'évidemment (22) est entouré par une bordure (26) perpendiculaire à la partie de paroi (23), chaque languette (19) présentant une bordure avant (27) en regard et distante de la bordure (26) entourant l'évidemment (22) de façon à former le deuxième espace (28) entre ladite bordure (26) et la bordure avant (27) de la languette (19) lorsque le couvercle (15) est emboité dans le corps (39).

8. Capteur de pression (1) selon l'une quelconque des revendications 5 à 7, **caractérisé en ce que**, lorsque le couvercle (15) est emboité dans la paroi périphérique (14) du corps (39), le troisième espace (40) est formé entre le rebord d'ouverture (29) de la paroi périphérique (14) du corps (39) du boîtier de protection (5) et la face principale (20) du couvercle (15).

9. Capteur de pression (1) selon l'une quelconque des revendications 1 à 8, **caractérisé en ce qu'**il comprend deux éléments sensibles à la pression (2a, 2b) connectés électriquement au circuit imprimé (3) et ayant chacun une première face (7) en communication fluidique avec une cavité (8) reliée à une entrée de pression (P1, P2) pour mesurer deux pressions distinctes dans l'organe du moteur.

## Patentansprüche

1. Drucksensor (1), der dazu bestimmt ist, an einem Organ eines Motors eines Fahrzeugs montiert zu sein, beinhaltend:
- eine Leiterplatte (3), die mindestens ein druckempfindliches Element (2a, 2b) umfasst, das mit der Leiterplatte (3) elektrisch verbunden ist, und
- ein Schutzgehäuse (5), in dem sich die Leiterplatte (3) und das druckempfindliche Element (2a, 2b) befinden, wobei das Schutzgehäuse (5) eine Kammer (6) bei atmosphärischem Druck beinhaltet, wobei das druckempfindliche Element (2a, 2b) eine erste Seite (7) in Fluidkommunikation mit einem Hohlraum (8a, 8b), der mit einem Druckeingang (P1, P2) verbunden ist, um einen Druck in dem Organ des Motors zu messen, und eine zweite Seite (9), die der ersten Seite (7) gegenüberliegt, in Fluidkommunikation mit der Kammer (6) beinhaltet, wobei die Kammer (6) und der Hohlraum (8a, 8b) durch das druckempfindliche Element (2a, 2b) hermetisch voneinander getrennt sind,
wobei die Kammer (6) teilweise durch eine äußere Hülle (10) begrenzt ist, die zwei unterschiedliche Luftzirkulationswege (11, 12) beinhaltet, die mit der Atmosphäre verbunden sind, darunter ein erster Luftzirkulationsweg (11) und ein zweiter Luftzirkulationsweg (12), wobei die äußere Hülle (10) an einem unteren Abschnitt (13) des Schutzgehäuses (5) positioniert ist, der dazu bestimmt ist, zu einer Unterseite des Fahrzeugs ausgerichtet zu sein, wenn der Drucksensor (1) an dem Organ des Fahrzeugmotors montiert ist,
**dadurch gekennzeichnet, dass**
die äußere Hülle (10) eine Umfangswand (14), die auf einem Körper (39) des Schutzgehäuses (5) gebildet ist und die Kammer (6) umgibt, und einen entfernbaren Deckel (15), der eine Hauptfläche (20) beinhaltet, die sich in die Umfangswand (14) des Körpers (39) einfügt, um die Kammer (6) zu verschließen, beinhaltet, wobei die zwei Luftzirkulationswege (11, 12) zwischen der Umfangswand (14) des Körpers (39) und dem Deckel (15) gebildet sind.

2. Drucksensor (1) nach Anspruch 1, **dadurch gekennzeichnet, dass** die Umfangswand (14) zwei große Längswände (16), die einander gegenüberliegen, und zwei kleinere Seitenwände (17), die einander gegenüberliegen, beinhaltet, wobei der erste Luftzirkulationsweg (11) in einer der Längswände (16) gebildet ist und der zweite Luftzirkulationsweg (12) in einer der Seitenwände (17) gebildet ist, wobei die Längswände (16) zu den Seitenwänden (17) senkrecht sind.

3. Drucksensor (1) nach einem beliebigen der Ansprüche 1 oder 2, **dadurch gekennzeichnet, dass** die Umfangswand (14) des Körpers (39) des Schutzgehäuses (5) zwei Öffnungen (11a, 12a) beinhaltet, die jeweils durch einen Öffnungsrand (29) begrenzt sind, wobei der Deckel (15) zwei Laschen (19) beinhaltet, die sich senkrecht zu der Hauptfläche (20) des Deckels (15) von einem Umfangsrand (21) des Deckels (15) erstrecken, wobei jede Lasche (19) dazu bestimmt ist, eine der Öffnungen (11a, 12a) teilweise abzudichten, um einen der Luftzirkulationswege (11, 12) zu bilden, wenn der Deckel (15) in den Körper (39) eingefügt ist.

4. Drucksensor (1) nach Anspruch 3, **dadurch gekennzeichnet, dass** die Ebene, die die erste und zweite Seite (7, 9) des druckempfindlichen Elements (2a, 2b) beinhaltet, senkrecht zu den Ebenen ist, die durch die zwei Öffnungen (11a, 12a) verlaufen.

5. Drucksensor (1) nach einem beliebigen der Ansprüche 1 bis 4, **dadurch gekennzeichnet, dass** jeder Luftzirkulationsweg (11, 12) einen ersten Raum (25), einen zweiten Raum (28) und einen dritten Raum (40) beinhaltet, um einen nicht linearen Luftzirkulationsweg (11, 12) zu bilden.

6. Drucksensor (1) nach Anspruch 5, wenn er von einem der Ansprüche 4 oder 5 abhängt, **dadurch gekennzeichnet, dass** die Öffnungen (11a, 12a) von einer Aussparung (22) umgeben sind, die in die Umfangswand (14) des Körpers (39) eingebracht ist, wobei die Aussparung (22) durch einen Wandabschnitt (23) mit geringerer Dicke als der Rest der Umfangswand (14) begrenzt wird, wobei die Laschen (19) eine Breite und eine Länge aufweisen, die größer sind als die der Luftzirkulationswege (11, 12), sodass sie sich in die Aussparung (22) einfügen, wobei jede Lasche (19) einen Randbereich (24) gegenüber und von dem Wandabschnitt (23) entfernt aufweist, um den ersten Raum (25) zwischen dem Randbereich (24) der Lasche (19) und dem Wandabschnitt (23) zu bilden.

7. Drucksensor (1) nach Anspruch 6, **dadurch gekennzeichnet, dass** die Aussparung (22) von einer Umrandung (26) umgeben ist, die zu dem Wandabschnitt (23) senkrecht ist, wobei jede Lasche (19) eine vordere Umrandung (27) gegenüber und von der Umrandung (26), die die Aussparung (22) umgibt, entfernt aufweist, um den zweiten Raum (28) zwischen der Umrandung (26) und der vorderen Umrandung (27) der Lasche (19) zu bilden, wenn der Deckel (15) in den Körper (39) eingefügt ist.

8. Drucksensor (1) nach einem beliebigen der Ansprüche 5 bis 7, **dadurch gekennzeichnet, dass**, wenn der Deckel (15) in die Umfangswand (14) des Körpers (39) eingefügt ist, der dritte Raum (40) zwischen dem Öffnungsrand (29) der Umfangswand (14) des Körpers (39) des Schutzgehäuses (5) und der Hauptfläche (20) des Deckels (15) gebildet ist.

9. Drucksensor (1) nach einem beliebigen der Ansprüche 1 bis 8, **dadurch gekennzeichnet, dass** er zwei druckempfindliche Elemente (2a, 2b) beinhaltet, die mit der Leiterplatte (3) elektrisch verbunden sind und jeweils eine erste Seite (7) in Fluidkommunikation mit einem Hohlraum (8), der mit einem Druckeingang (P1, P2) verbunden ist, aufweisen, um zwei unterschiedliche Drücke in dem Organ des Motors zu messen.

## Claims

1. Pressure sensor (1) intended to be mounted on a member of a vehicle engine, comprising:
- a printed circuit board (3) having at least one pressure-sensitive element (2a, 2b) electrically connected to the printed circuit board (3), and
- a protective housing (5) in which the printed circuit board (3) and the pressure-sensitive element (2a, 2b) are housed, the protective housing (5) comprising a chamber (6) at atmospheric pressure, the pressure-sensitive element (2a, 2b) comprising a first face (7) in fluidic communication with a cavity (8a, 8b) connected to a pressure inlet (P1, P2) for measurement of a pressure in the member of the engine, and a second face (9), opposite to the first face (7), in fluidic communication with the chamber (6), the chamber (6) and the cavity (8a, 8b) being separated from one another hermetically by the pressure-sensitive element (2a, 2b),
the chamber (6) being partially delimited by an outer envelope (10) comprising two separate air circulation paths (11, 12) that are connected to the atmosphere, namely a first air circulation path (11) and a second air circulation path (12), the outer envelope (10) being positioned at a lower part (13) of the protective housing (5), said lower part being intended to be oriented towards a bottom part of the vehicle when the pressure sensor (1) is mounted on the member of the vehicle engine,
**characterized in that**
the outer envelope (10) comprises a peripheral wall (14) formed on a body (39) of the protective housing (5), surrounding the chamber (6), and a removable cover (15) comprising a main face (20) which fits into the peripheral wall (14) of the body (39) so as to close the chamber (6), the two air circulation paths (11, 12) being formed between the peripheral wall (14) of the body (39) and the cover (15).

2. Pressure sensor (1) according to Claim 1, **characterized in that** the peripheral wall (14) comprises two longitudinal walls (16) of large dimension, which are opposite to one another, and two lateral walls (17) of smaller dimension, which are opposite to one another, the first air circulation path (11) being formed in one of the longitudinal walls (16) and the second air circulation path (12) being formed in one of the lateral walls (17), the longitudinal walls (16) being perpendicular to the lateral walls (17).

3. Pressure sensor (1) according to either one of Claims 1 and 2, **characterized in that** the peripheral wall (14) of the body (39) of the protective housing (5) comprises two openings (11a, 12a) that are each delimited by an opening rim (29), the cover (15) comprising two tabs (19) that extend perpendicularly with respect to the main face (20) of the cover (15) from a peripheral edge (21) of the cover (15), each tab (19) being intended to partially obstruct one of the openings (11a, 12a) so as to form one of the air circulation paths (11, 12) when the cover (15) is fitted on the body (39).

4. Pressure sensor (1) according to Claim 3, **characterized in that** the plane comprising the first and second faces (7, 9) of the pressure-sensitive element (2a, 2b) is perpendicular to the planes passing through the two openings (11a, 12a).

5. Pressure sensor (1) according to any one of Claims 1 to 4, **characterized in that** each air circulation path (11, 12) comprises a first space (25), a second space (28) and a third space (40) so as to form a non-linear air circulation path (11, 12).

6. Pressure sensor (1) according to Claim 5 when it is dependent on one of Claims 4 or 5, **characterized in that** the openings (11a, 12a) are surrounded by a cutout (22) recessed into the peripheral wall (14) of the body (39), the cutout (22) being delimited by a wall part (23) with a thickness smaller than the rest of the peripheral wall (14), the tabs (19) having a width and a length that are greater than those of the air circulation paths (11, 12) so as to be inserted in the cutout (22), each tab (19) having a peripheral zone (24) facing and remote from the wall part (23) so as to form the first space (25) between the peripheral zone (24) of the tab (19) and the wall part (23).

7. Pressure sensor (1) according to Claim 6, **characterized in that** the cutout (22) is surrounded by a border (26) perpendicular to the wall part (23), each tab (19) having a front border (27) facing and remote from the border (26) surrounding the cutout (22) so as to form the second space (28) between said border (26) and the front border (27) of the tab (19) when the cover (15) is fitted in the body (39).

8. Pressure sensor (1) according to any one of Claims 5 to 7, **characterized in that**, when the cover (15) is fitted in the peripheral wall (14) of the body (39), the third space (40) is formed between the opening rim (29) of the peripheral wall (14) of the body (39) of the protective housing (5) and the main face (20) of the cover (15).

9. Pressure sensor (1) according to any one of Claims 1 to 8, **characterized in that** it comprises two pressure-sensitive elements (2a, 2b) that are electrically connected to the printed circuit board (3) and that each have a first face (7) in fluidic communication with a cavity (8) connected to a pressure inlet (P1, P2) for measurement of two separate pressures in the member of the engine.
